# EUROPEAN PATENT APPLICATION

(11) **EP 3 101 321 A1**
(43) Date of publication of application: **07.12.2016**
(21) Application number: 16172643.5
(22) Date of filing: 02.06.2016
(51) Int. Cl.: F16K 31/06, H01F 7/16, H01F 7/08

(54) **A SOLENOID VALVE HAVING ITS ARMATURE AND YOKE CORE EQUIPPED WITH ENGAGEABLE PROJECTING MALE AND RECESSED FEMALE CHOKE PARTS THAT HAVE BACKWARDS INCREASED AND/OR DECREASED CROSS-SECTIONAL DIMENSIONS**

(30) Priority: 02.06.2015 NL 2014905
(71) Applicant: ASCO CONTROLS B.V., 3925 BD Scherpenzeel (NL)
(72) Inventor: VAN SCHIJNDEL, Stefanus Theodorus Maria, 3931 ML WOUDENBERG (NL); Linnenbank, Marcel Petrus Wilhelmus, 3833 CN LEUSDEN (NL)
(74) Representative: EP&C

(57) **Abstract**

A solenoid valve assembly 1 comprises a solenoid operator 10 with a yoke core 14 and an armature 20. The armature is movably guided such that it can move back and forth in a longitudinal direction relative to the yoke core between a starting and switched position, while moving a valve element along with it. The armature and the yoke core comprise a projecting male choke part 30, 31 and a recessed female choke part 21 that are engageable into each other in a longitudinal direction. Cross-sectional dimensions of a circumferential outer sidewall of the projecting male choke part decrease along the longitudinal direction away from its front face, and/or cross-sectional dimensions of a circumferential inner sidewall of the recessed female choke part increase along the longitudinal direction away from its front face towards its bottom face.

## Description

The invention relates to a solenoid valve assembly that comprises a valve body with at least an inlet and outlet port, a valve element that is moveable to control medium flow between the ports and a solenoid operator associated with the valve element for moving the valve element in dependence of electric current being fed to the solenoid operator.

Such solenoid valve assemblies are known in many variants. For example DE 10 2007 028 910 shows an example of such an assembly in which the solenoid operator has a cylindrical coil of electrically conductive wire that is wound around a bobbin carrier. The bobbin carrier delimits a central cylindrical space. Inside an upper part of this central coil space a fixed core part is provided, also referred to as plugnut. The fixed core part connects to a back plate that covers an upper end side of the coil. The back plate connects to an upper edge of a cup-shaped yoke frame. The cup-shaped yoke frame extends with its circumferential wall along the outer circumferential side of the coil and then covers with its bottom a lower end side of the coil. At the location of the central coil space, the bottom of the yoke frame comprises a central hole around which it is inwardly flanged upwards to inside the central coil space to form a guide for a movable core part and for increasing a flux passage area. The movable core part is movable in the longitudinal direction from a starting position towards a switched position. This movable core part, which is also referred to as armature, largely extends into the central coil space and there faces the fixed core part while leaving an air gap free between them in the starting position. A slide-bearing bush has been injection moulded in between the inwardly upwards flanged part of the yoke frame and an inwardly downwards flanged part of the back plate. This slide-bearing bush offers additional support for the fixed core part and offers additional guidance for the movable core part. When electric current is fed to the solenoid operator, the movable core part gets magnetically attracted towards the fixed core part and shall start to move towards the fixed core part towards its switched position, while moving a valve element along with it.

The fixed core part comprises in its free outer end, a cylindrical recess that forms a female choke part. The recess is circumvented by a bevelled front edge. The movable core part has its free outer end form a cylindrical male choke part that is engageable into the cylindrical recess. In the starting position an air gap is present between a flat front face of the movable core part and a flat bottom face of the recess inside the fixed core part. The projecting male choke part has a diameter that is slightly smaller than the diameter of the recess in the female choke part such that in the switched position a small radial spacing remains between their facing cylindrical circumferential sidewalls. In the switched position the fixed and moveable core parts have fully engaged into each other with their male and female choke parts.

A disadvantage with this known solenoid valve assembly is that its functioning and construction leave to be improved. For example the engageable choke parts engaging into each other may lead to magneto motive force (MMF) leaking away via the radial spacing between the movable core part and the fixed core part. Also it is desired to further influence and/or maximise the strength of the magnetic field in relation to ampere-turns (AT) of this known solenoid valve assembly during movements of its movable core part. Another disadvantage is that its relative small area for flux transfer limits the MMF due to saturation.

The present invention aims to at least partly overcome the abovementioned disadvantages or to provide a usable alternative. In particular it aims to provide an economic, reliable solenoid valve assembly that has optimized MMF behaviour and maximum strength of its magnetic field in relation to its AT's.

This aim is achieved by a solenoid valve assembly according to claim 1. The assembly comprises a valve body with at least an inlet and outlet port, a valve element that is moveable to control medium flow between the ports, and a solenoid operator that is associated with the valve element for moving the valve element in dependence of electric current being fed to the solenoid operator. The solenoid operator has a coil of electrically conductive wire wound around a carrier that delimits a central coil space extending in a longitudinal direction in between a first end side, in particular an upper end side, and a second end side, in particular a lower end side, of the coil. Furthermore the solenoid operator has a yoke core of magnetisable material, which yoke core extends in the longitudinal direction through at least part of the central coil space, and an armature of magnetisable material that is movably guided such that it can move back and forth over a stroke length in the longitudinal direction relative to the yoke core between a starting position and a switched position, while moving the valve element along with it. The armature and the yoke core comprise a projecting male choke part and a recessed female choke part that are engageable into each other in the longitudinal direction. The projecting male choke part comprises a front face and a circumferential outer sidewall. The recessed female choke part comprises a front face having a recess therein with a bottom face and a circumferential inner sidewall. The front face of the projecting male choke part lies opposite the bottom face of the recessed female choke part. An air gap is present between them in the starting position. In the switched position, the choke parts are engaged into each other with the circumferential outer sidewall of the projecting male choke part facing the circumferential inner sidewall of the recessed female choke part. According to the inventive thought, cross-sectional dimensions of the circumferential outer sidewall of the projecting male choke part decrease along the longitudinal direction away from its front face, and/or cross-sectional dimensions of the circumferential inner sidewall of the recessed female choke part increase along the longitudinal direction away from its front face towards its bottom face.

Owing to the invention it is thus achieved that a sort of hybrid system is obtained in which a magnetic force that is created between the yoke core and the armature can be optimized during both a beginning and ending of the engaging movement of the projecting male choke part into the recessed female choke part. Owing to the inventive thought it is advantageously obtained that as soon as the choke parts start reaching their switched end positions in which they have engaged into each other, less or hardly any magnetic flux "leaks" away sideways via the facing circumferential sidewalls of the choke parts. This is because of the provision of the backwards increased or decreased cross-sectional dimensions of those facing circumferential sidewalls, which causes the mean sideways spacing between the facing circumferential sidewalls to increase, making it harder for the magnetic flux to cross sideways over this spacing. Thus more magnetic flux remains available for flowing in the longitudinal direction between the facing bottom and front faces of the choke parts and thus exert a stronger magnetic attraction force onto the armature towards the yoke core.

When, in the starting position, electric current gets fed to the solenoid operator, magnetic forces start to arise between the yoke core and the armature, and transfer paths for magnetic flux shall seek their most optimum ways between them. Merely a small part or hardly any of this magnetic flux then shall be able to flow over the air gap between the front and bottom faces of the choke parts in the longitudinal direction, if the air gap in this starting position is chosen relative large. Thanks to the invention, this is no problem because owing to the specifically shaped and dimensioned choke parts, the magnetic flux, in this starting position, is able to easily start flowing over the spacing between the front edge sections of the choke parts in the sideways direction, if the spacing in this starting position is chosen relative small, in particular smaller than 5 times the air gap in the starting position (which is equal to the stroke length). The sideways flowing magnetic flux aids in creating a sufficiently high enough MMF that is able to start moving the armature towards the yoke core. Owing to this starting movement, the choke parts shall start to engage into each other, and with that shall start to progressively decrease the air gap. Thus, after the choke parts have engaged far enough into each other, the magnetic flux shall be able to flow more and more over the air gap between the front and bottom faces of the choke parts in the longitudinal direction, since the air gap then has become small enough. This is advantageous because those fluxes crossing the air gap in the longitudinal direction, lead to higher magnetic attraction forces between the armature and the yoke core in that longitudinal direction than that the fluxes do that cross the spacing in the sideways direction. It is emphasized that owing to the present invention those higher magnetic attraction forces that start to occur during this engaging movement, are further optimized by the fact that one or both of the male and female choke parts is/are equipped with the backwards decreased respectively increased cross-sectional dimensions. Those backwards decreased/increased cross-sectional dimensions form so-called undercuts along one or both of the respective circumferential sidewalls of the projecting male choke part. During the switching movement towards the switched position, such an undercut in one of the circumferential sidewalls has gotten to face the other circumferential sidewall, or has gotten to face such an undercut in this other circumferential sidewall. Owing to this, the sideways spacing between the facing sidewalls at the location of the undercut is relative large and the magnetic flux advantageously is far less likely to jump over this increased sideways spacing at the position of the undercut(s). Thus less magnetic field is able to "leak" away sideways in this switched position, and more magnetic field remains available to follow a flux path in the longitudinal direction and thus exert a more optimized MMF in this longitudinal direction.

The choke parts are preferably constructed such that in the starting position, in which the choke parts have not engaged into each other yet, an initial spacing in a sideways direction (perpendicular to the longitudinal direction), between front edge sections of said sidewalls, is at least 5 times smaller than the stroke length of the air gap in that starting position. For example the stroke length may be at least 1.0 mm, whereas the spacing between the front edge sections in the starting position is at most 0.2 mm.

The initial sideways spacing between the front edge sections of said sidewalls, in the starting position, can be kept very narrow, in particular less than 0.2 mm, in order to assure a very low magnetic loss between those front edge sections of the armature and yoke core. The iron circuit of the solenoid operator can thus be further optimized, and a maximum magnetic force can be gained out of supplied AT's during the entire switching movement of the armature.

The projecting male choke part can be made on the armature, while the recessed female choke part can be made on the yoke core. Preferably however, the yoke core may comprise the projecting male choke part, and the armature may comprise the recessed female choke part. This is advantageous because the movable armature then may get to have a lower weight.

In a preferred embodiment either the cross-sectional dimensions of the circumferential outer sidewall of the projecting male choke part decrease along the longitudinal direction away from its front face, either the cross-sectional dimensions of the circumferential inner sidewall of the recessed female choke part increase along the longitudinal direction away from its front face towards its bottom face. Thus only one choke part has gotten equipped with an undercut, and this has the advantage that the other choke part then can be made with a simpler construction. In particular either the circumferential outer sidewall of the projecting male choke part either the circumferential inner sidewall of the recessed female choke part then can be made straight such that it gets to extend parallel to the longitudinal direction. For example a fully cylindrical recess then may get to face and move along an undercut projection, or in the alternative a fully cylindrical projection then may get to face and move along an undercut recess.

In an embodiment the circumferential outer sidewall of the projecting male choke part may comprise a gradually decreasing section, and/or the circumferential inner sidewall of the recessed female choke part may comprise a gradually increasing section. This offers the advantage that the sideways spacing along the undercut also gradually increases or decreases.

In a further embodiment the gradually decreasing or increasing section may be a bevelled section that is angled relative to the longitudinal direction. Such a bevelled section can easily be manufactured on one or both the choke parts.

An angle of the bevelled section then preferably lies in between 10-20 degrees relative to the longitudinal direction. Thus a proper balance is obtained between magnetic saturation and strength of the front edge section(s), and/or thus a best compromise is obtained between high attraction forces at relative large and short axial stroke distances between the male and female choke parts.

In an alternative embodiment or in addition thereto the circumferential outer sidewall of the projecting male choke part may comprise a stepped decreasing section, and/or the circumferential inner sidewall of the recessed female choke part may comprise a stepped increasing section. This has the advantage that the sideways spacing along the stepped undercut is kept constant. Likewise the front edge section(s) may also be provided with straight circumferential inner sidewall sections that get to extend parallel to the longitudinal direction. The undercut(s) backwards of the front edge section(s) then may extend gradual and/or stepped towards the increased or decreased cross-sectional dimensions.

The gradually or stepped decreasing or increasing section preferably ends at a distance of the respective front face of the projecting male or recessed female choke part that is smaller than or equal to the stroke length.

In an advantageous embodiment the male and female choke parts are constructed such that a smallest radial play between the two of them, which is considered to be equal to smallest cross-sectional dimensions of the recessed female projecting part minus largest cross-sectional dimensions of the projecting male choke part, may be kept less than 0.2 mm. In another advantageous embodiment the male and female choke parts are constructed such that a largest radial play between the two of them, which is considered to be equal to largest cross-sectional dimensions of the recessed female choke part minus smallest cross-sectional dimensions of the projecting male choke part, may be kept more than 0.5 mm.

Further preferred embodiments are stated in the subclaims.

The invention shall be explained in more detail below with reference to the accompanying drawings, in which:
- Fig. 1 shows a schematic cross-sectional view of an embodiment of the solenoid valve assembly according to the invention;
- Fig. 2a shows an enlarged partial view of the choke parts of fig. 1 in the starting position;
- Fig. 2b shows an enlarged partial view of the choke parts of fig. 1 in the switched position;
- Fig. 3 shows a view according to fig. 2a of a non-claimed variant with straight-walled choke parts;
- Fig. 4 shows a view according to fig. 2a of a non-claimed variant without choke parts;
- Fig. 5 shows a force-stroke graph of the embodiments of fig. 2, 3 and 4;
- Fig. 6 shows a force-stroke graph for three different angles of the bevelled choke part as well as the non-claimed straight-walled choke parts of fig. 3;
- Fig. 7a-b show views according to fig. 2a-b for a variant;
- Fig. 8 shows a view according to fig. 1 of an alternative embodiment of the solenoid operator;
- Fig. 9a shows an enlarged partial view of the choke parts of fig. 8 in the starting position;
- Fig. 9b shows an enlarged partial view of the choke parts of fig. 8 in the switched position;
- Fig. 10a-b show views according to fig. 9a-b for a variant of this alternative embodiment;
- Fig. 11 shows a variant of fig. 2a with bevelled male and female choke parts; and
- Fig. 12 shows a variant of fig. 2a with stepped male and female choke parts.

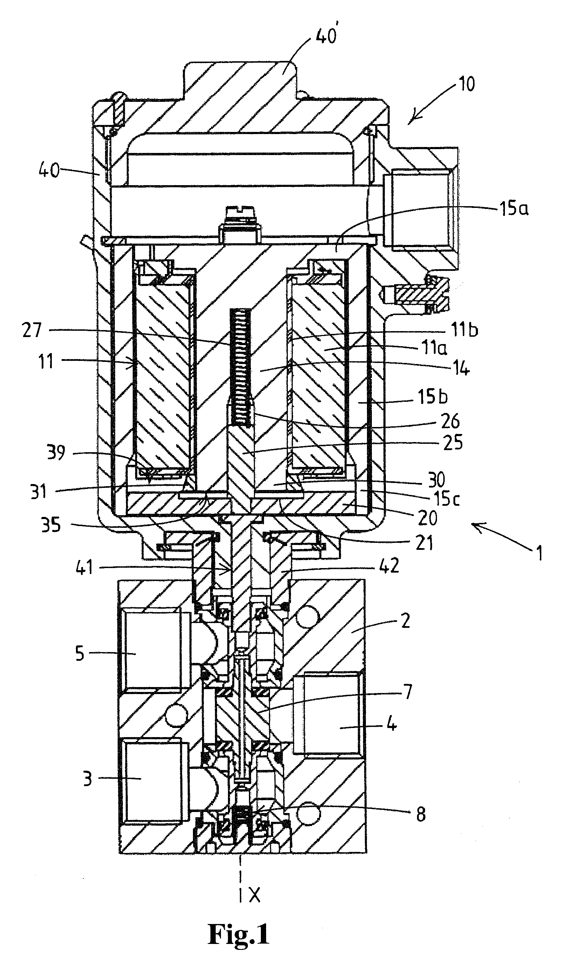

In fig. 1 the entire solenoid valve assembly has been indicated with the reference numeral 1. The assembly 1 comprises a valve body 2 with an inlet port 3, an outlet port 4 and an exhaust 5. A valve element 7 is moveable in a longitudinal direction x to control medium flow between the ports 3-5. The valve element 7 here is biased upwards by a push spring 8.

The assembly 1 further comprises a solenoid operator 10. The solenoid operator 10 has a substantially cylindrical coil 11 of electrically conductive wire 11a wound around a bobbin-type carrier 11 b. Inside the coil 11 a substantially cylindrical central coil space is present.

An integral assembly of a yoke core 14 and a yoke frame 15 both made out of a magnetisable material like steel, extends partly through and around the coil 11. With this the yoke core 14 fills up the entire central coil space. The yoke frame 15 comprises a back plate 15a that faces and lies against an upper end side of the coil 11. Furthermore, the yoke frame 15 comprises a cylindrical first frame part 15b that extends in the longitudinal direction x along the outer circumferential side of the coil 11 from the first upper end side of the coil 11 towards a lower end side of the coil 11. There the yoke frame 15 continues to extend in the longitudinal direction x past the second lower end side of the coil 11 and there forms a cylindrical second frame part 15c. This cylindrical second frame part 15c forms a yoke cylinder guide. The yoke cylinder guide has an inner diameter that is a few millimetres larger than the outer diameter of the coil 11.

A disc-shaped armature 20 is provided, made out of a magnetisable material like steel, that forms a yoke piston that is movably guided inside the yoke cylinder guide such that it can move back and forth in the longitudinal direction x relative to the yoke core 14. The armature 20 has an outer diameter that is a few millimetres larger than the outer diameter of the coil 11. The armature 20 fits with a sliding fit inside the cylindrical second frame part 15c such that the radial air gap between them is minimal. If desired a piston ring of magnetisable material can even be provided in a circumferential groove of the armature 20. This advantageously reduces the radial air gap between the armature 20 and the yoke cylinder guide to zero.

The armature 20 forms a recessed female choke part F that comprises a centrally located cylindrical recess 21 in its front face 22. The recess 21 is delimited by a bottom face 23 and an inner circumferential sidewall 24. The sidewall 24 is straight and extends parallel to the longitudinal direction x. The cylindrical recess 21 has a constant diameter D1.

A guiding pin 25 that is made out of a non-magnetisable material, for example brass, plastic or ceramic, is fixedly connected to the armature 20. The guiding pin 25 extends upwards in the direction of the yoke core 14 and is movably guided inside a complementary hole 26 that is provided inside the yoke core 14. A compression spring 27 is mounted in between an inner end of the hole 26 and an upper end of the guiding pin 25. The push spring 27 serves the purpose to push the assembly of the guiding pin 25 and the armature 20 downwards into a starting position as is shown in fig. 1.

The yoke core 14 comprises an outwardly downwards projecting yoke core part 30 that projects in the longitudinal direction x outside the central coil space. Furthermore the yoke core 14 comprises a sideways extending yoke core part 31 that here is formed by a ring that is fixedly connected, for example press-fit or threaded, to the outwardly projecting yoke core part 30 and that faces and lies against a radial inner part of the second end side of the coil 11. The outwardly projecting yoke core part 30 and the sideways extending yoke core part 31 together form a cylindrical projecting male choke part M that is engageable into the cylindrical choke recess 21.

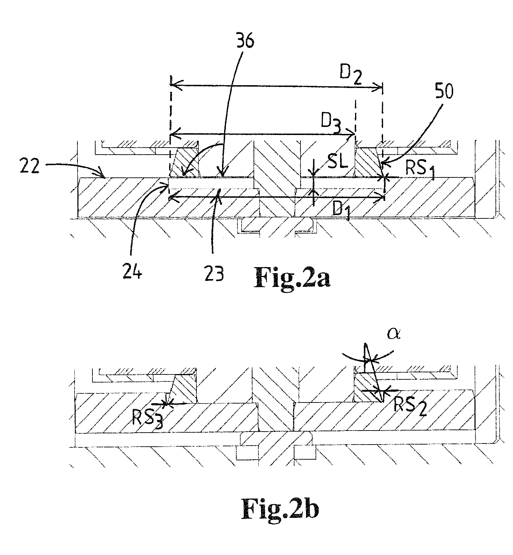

In the starting position as shown in fig. 1 and 2a, an air gap 35 is present between a front face 36 of the male choke part M and the bottom face 23 of the recess 21. The air gap 35 provides a stroke length SL in the longitudinal direction x of between for example 0.5-2.5 mm. The armature 20 lies spaced from the second lower end side of the coil 11, in which, seen in the longitudinal direction x, a spacing 39 between the armature 20 and the coil 11 is larger than the air gap 35.

The sideways extending yoke core part 31 advantageously enlarges the surface area for flux transfer through the air gap 35, and thus helps to reduce any losses over this air gap 35 as much as possible.

A two-part solenoid housing 40, 40' is provided that covers the solenoid operator 10. At its lower end side the solenoid housing 40 is connected to the valve body 2. At this lower end side, the solenoid housing 40 is provided with a guiding channel 41. An operating pin 42 is movably guided inside this guiding channel 41 with a sliding fit such that a flamepath is formed. The operating pin 42 lies with its upper end freely against the assembly of the guiding pin 25 and armature 20 such that it can get pushed downwards by the spring 27 in the starting position as shown in fig. 1. The operating pin 42 in turn lies against the valve element 7 and pushes it downwards against the force of the spring 8.

According to the invention, the sideways extending yoke core part 31 of the projecting male choke part M comprises a backwards angled bevelled circumferential sidewall 50 such that it has a truncated cone shape that has its largest diameter D2 at its front face 36, and that has its smallest diameter D3 at its back face that lies against the coil 11.

In the starting position as shown in fig. 1 and 2a, a radial spacing RS1 between front edge sections of the bevelled outer sidewall 50 and front edge sections 54 of the straight inner sidewall 24 is equal to D1 minus D2. As can be seen this RS1 is more than 5 times smaller than the stroke length SL of the air gap 35 in this starting position.

The operation of the assembly 1 is as follows: When electric current is fed to the coil 11 and starts to flow through the wire windings thereof, a magnetic field is set up around the wire windings. The magnetic field flows through the yoke frame 15 and the armature 20 around the coil 11 and through the yoke core 14 in its centre in a doughnut shape. In the starting position the magnetic flux first shall mainly start to flow between the front edge sections of the male and female choke parts M, F, that is to say sideways over the radial spacing RS1. A magnetic force is created between the fixed yoke core 14 and the armature 20, and, if high enough to overcome the force of the spring 27, the movable armature 20 then starts to move up towards the yoke core 14 to increase the flux linkage by closing the air gap 35 there between. Thus the reluctance of the air gap 35 gets progressively reduced and more and more magnetic flux shall start to flow between the bottom face 23 and the front face 36 of the male and female choke parts M, F, that is to say longitudinally over the air gap 35. During the upward movement of the armature 20, the male and female choke parts M, F engage into each other, and the valve element 7 and the operating pin 42 get pushed upwards by the spring 8, thus switching the medium flow between the ports 3-5. The upwards movement ends as soon as the choke parts M, F have fully engaged into each other and thus the switched position as shown in fig. 2b is reached.

In this switched position the radial spacing RS3 between the front edge sections of the bevelled outer sidewall 50 and the straight inner sidewall 24 has remained equal to RS1 and thus is still equal to D1 minus D2. However, a radial spacing RS2 between back edge sections of the bevelled outer sidewall 50 and the straight inner sidewall 24 now has become equal to D1 minus D3, which is more than 2 times larger than RS1. Furthermore, the air gap 35 has now reduced to zero since the bottom face 23 and the front face 36 have come to lie against each other.

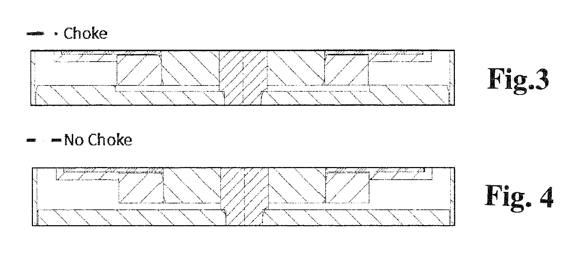

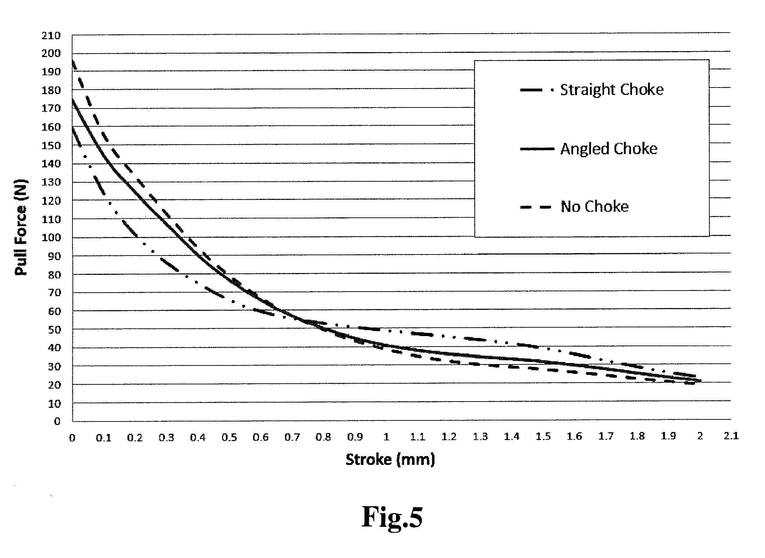

In fig. 5 the influence is shown of the male choke part M being equipped with a bevelled outer circumferential sidewall. This is done by comparing it with a similar solenoid valve assembly having choke parts with merely straight inner and outer facing circumferential sidewalls of their choke parts as is shown in fig. 3, and with a similar solenoid valve assembly that does not have male and female choke parts at all as is shown in fig. 4.

It can be seen clearly there that the embodiment with the engageable bevelled male choke part is able to offer an entirely different force-stroke diagram compared to the fig. 3 and 4 embodiments. The maximum stroke length here is 1.5 mm. At this initial air gap of 1.5 mm, the embodiment with the engageable bevelled male choke part is able to almost immediately start exerting an almost 1.5 as large pulling force upon the armature compared to the no choke embodiment of fig. 4. When the air gap has subsequently reduced to less than 0.7 mm, it follows that for this embodiment with the engageable bevelled male choke part, the pulling force is able to be about 20 Newton higher compared to the straight choke embodiment of fig. 3. A designer can advantageously make use of those differences in pulling force behaviour.

When subsequently the electric current is switched off, the armature 20 is no longer forcedly attracted by the yoke core 14, and the spring 27 shall force the armature 20 to move down back again to its starting position, and with this push the valve element 7 via the operating pin 42 also back downwards against the force of the spring 8 towards its starting position again.

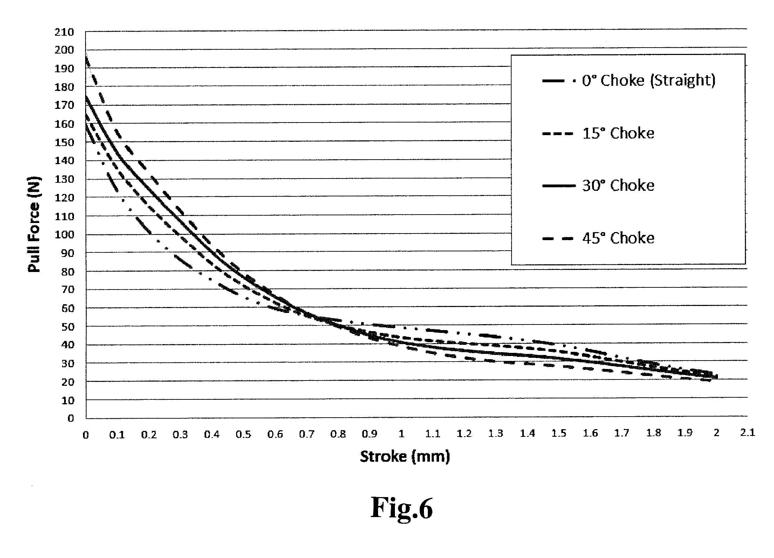

In fig. 6 the influence is shown of changing the angle α of the bevelled male choke part. There it can be seen that the less steep the angle α is, the higher pulling forces that may arise during the end phase of the switching movement towards the switched position.

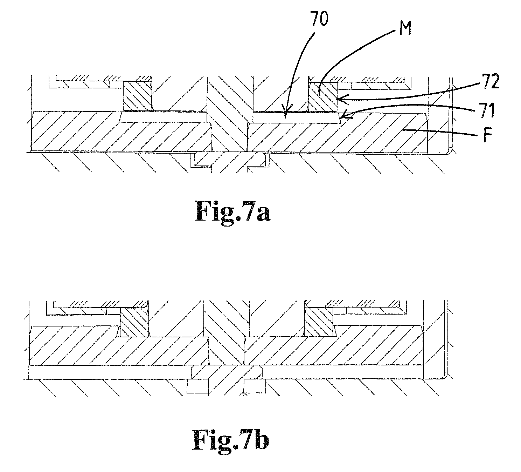

In fig. 7 a variant is shown in which a recess 70 in a female choke part F has been constructed with a backwards bevelled inner circumferential sidewall 71, while a male choke part M has been constructed with a cylindrical outer circumferential sidewall 72. Then also the advantageous choking effect is obtained during a moving of the male choke part M from its starting position (fig. 7a) towards its switched position (fig. 7b).

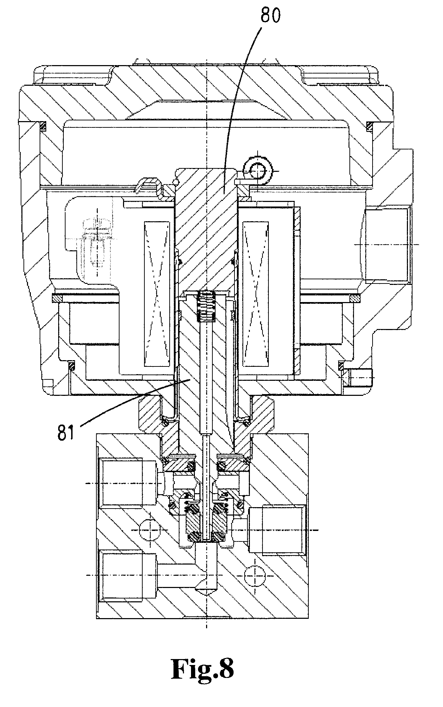

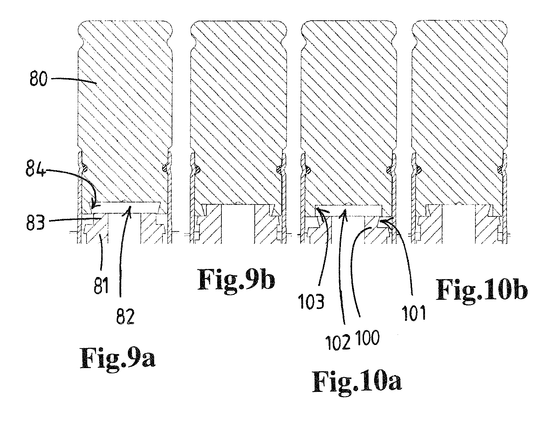

In fig. 8-9 a variant is shown in which a plugnut forms a fixed core part 80 that only extends through an upper part of a coil space. An armature here is formed as a movable core part 81 that is movably guided back and forth through a lower part of the coil space. The fixed core part 80 comprises a central cylindrical recess 82 in order to form a recessed female choke part F. The movable core part 81 comprises a central cylindrical projection 83 in order to form a projecting male choke part M. The recess 82 here has a backwards angled inner circumferential sidewall 84 such that an undercut is formed. In this embodiment also the advantageous choking effect is obtained during a moving of the male choke part M from its starting position (fig. 9a) towards its switched position (fig. 9b).

In fig. 10 a variant is shown in which a projection 100 of a male choke part M has been constructed with a backwards bevelled outer circumferential sidewall 101 such that an undercut is formed, while a recess 102 in a female choke part F has been constructed with a cylindrical inner circumferential sidewall 103. In this variant embodiment also the advantageous choking effect is obtained during a moving of the male choke part M from its starting position (fig. 10a) towards its switched position (fig. 10b).

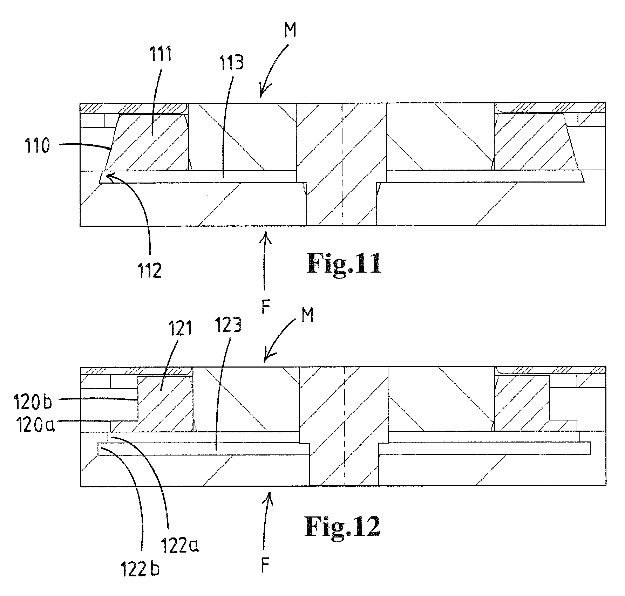

In fig. 11 a variant is shown in which a circumferential outer sidewall 110 of a projection 111 of a male choke part M has been constructed with a bevelled gradually decreasing section. At the same time a circumferential inner side wall 112 of a recess 113 of a female choke part F has been constructed with a bevelled gradually increasing section. Both bevelled male and female choke parts M, F together advantageously cause less magnetic flux to flow away sideways via the facing sidewalls 110, 112 during an end phase of a switching movement of the choke parts. During movement of the choke parts M, F from the starting position as shown in fig. 11 towards the switched position (not shown), a radial spacing between the sidewalls 110, 112 gradually increases from a minimum radial spacing between merely their free end edges, to a maximum radial spacing. The maximum radial spacing here is equal over the entire axial height of the choke parts M, F when fully gripping into each other in the switched position, because the angles of the bevelled parts are the same. In variant it is however also possible to construct the doubly undercut choke parts with different angles.

In fig. 12 a variant is shown in which a circumferential outer sidewall 120 of a projection 121 of a male choke part M has been constructed with two steps 120a, 120b together forming a stepped decreasing section. At the same time a circumferential inner side wall 122 of a recess 123 of a female choke part F has been constructed with two steps 122a, 122b together forming a stepped increasing section. Both stepped male and female choke parts M, F together also advantageously cause less magnetic flux to be able to flow away sideways via the facing sidewalls 120, 122 during an end phase of a switching movement of the choke parts. During movement of the choke parts M, F from the starting position as shown in fig. 12 towards the switched position (not shown), a radial spacing between the sidewalls 120, 122 increases with a step from a minimum radial spacing that occurs as long as their steps 120a and 122a at least partly slide along and thus face each other, to a maximum radial spacing as soon as their steps 120a and 120b no longer slide along and face each other when the choke parts M, F have gotten to fully grip into each other in the switched position.

Besides the embodiments shown numerous variants are possible. For example the respective shapes and dimensions of the various parts can be varied. Furthermore it is possible to combine the solenoid operator with different types of valve bodies and valve elements. Instead of providing a yoke, it is also possible to use the invention without such a yoke. Instead of the front face of the projecting male choke part and the bottom face of the recess in the recessed female choke part being flat and extending in the sideways direction perpendicular to the longitudinal direction, it is also possible to give them other more or less complementary shapes between which an air gap is present in the starting position. For example said front and bottom faces may be made cone shaped.

Thus the invention provides a solenoid valve assembly that is able to offer strong pulling forces at lower amp turns due to bigger flux passage surface area at the air gap for the MMF and by making use of undercut choke parts such that during an end phase of a switching movement less magnetic flux gets to flow away sideways via the facing sidewalls of the choke parts.

## Claims

1. A solenoid valve assembly comprising:
- a valve body with at least an inlet and outlet port;
- a valve element moveable to control medium flow between the ports;
- a solenoid operator associated with the valve element for moving the valve element in dependence of electric current being fed to the solenoid operator, in which the solenoid operator has:
- a coil of electrically conductive wire wound around a carrier that delimits a central coil space extending in a longitudinal direction in between first and second end sides of the coil;
- a yoke core of magnetisable material, which yoke core extends in the longitudinal direction through at least part of the central coil space; and
- an armature of magnetisable material that is movably guided such that it can move back and forth over a stroke length in the longitudinal direction relative to the yoke core between a starting position and a switched position, while moving the valve element along with it,
in which the armature and the yoke core comprise a projecting male choke part and a recessed female choke part that are engageable into each other in the longitudinal direction, in which the projecting male choke part comprises a front face and a circumferential outer sidewall,
in which the recessed female choke part comprises a front face having a recess therein with a bottom face and a circumferential inner sidewall,
the front face of the projecting male choke part lying opposite the bottom face of the recessed female choke part, an air gap being present between them in the starting position, in which the choke parts in the switched position are engaged into each other with the circumferential outer sidewall of the projecting male choke part facing the circumferential inner sidewall of the recessed female choke part,
**characterized in that,**
cross-sectional dimensions of the circumferential outer sidewall of the projecting male choke part decrease along the longitudinal direction away from its front face,
and/or
cross-sectional dimensions of the circumferential inner sidewall of the recessed female choke part increase along the longitudinal direction away from its front face towards its bottom face.

2. A solenoid valve assembly according to claim 1, wherein the yoke core comprises the projecting male choke part, and wherein the armature comprises the recessed female choke part.

3. A solenoid valve assembly according to one of the preceding claims, wherein either the cross-sectional dimensions of the circumferential outer sidewall of the projecting male choke part decrease along the longitudinal direction away from its front face, either the cross-sectional dimensions of the circumferential inner sidewall of the recessed female choke part increase along the longitudinal direction away from its front face towards its bottom face.

4. A solenoid valve assembly according to claim 3, wherein either the circumferential outer sidewall of the projecting male choke part either the circumferential inner sidewall of the recessed female choke part is straight and extends parallel to the longitudinal direction.

5. A solenoid valve assembly according to one of the preceding claims, wherein the circumferential outer sidewall of the projecting male choke part comprises a gradually decreasing section,
and/or
wherein the circumferential inner sidewall of the recessed female choke part comprises a gradually increasing section.

6. A solenoid valve assembly according to claim 5, wherein the gradually decreasing or increasing section is a bevelled section that is angled relative to the longitudinal direction.

7. A solenoid valve assembly according to claim 6, wherein an angle of the bevelled section lies in between 10-20 degrees relative to the longitudinal direction.

8. A solenoid valve assembly according to one of the preceding claims, wherein the circumferential outer sidewall of the projecting male choke part comprises a stepped decreasing section,
and/or
wherein the circumferential inner sidewall of the recessed female choke part comprises a stepped increasing section.

9. A solenoid valve assembly according to one of the preceding claims 5-8, wherein the gradually or stepped decreasing or increasing section ends at a distance of the respective front face of the projecting male or recessed female choke part that is smaller than or equal to the stroke length.

10. A solenoid valve assembly according to one of the preceding claims, wherein largest cross-sectional dimensions of the projecting male choke part are less than 0.2 mm smaller than smallest cross-sectional dimensions of the recessed female projecting part, and wherein smallest cross-sectional dimensions of the projecting male choke part are more than 0.5 mm larger than largest cross-sectional dimensions of the recessed female choke part.

11. A solenoid valve assembly according to one of the preceding claims, wherein in the starting position the front face of the projecting male choke part lies substantially in a same plane as the front face of the recessed female choke part.

12. A solenoid valve assembly according to one of the preceding claims, wherein in the switched position the front face of the projecting male choke part lies substantially against the bottom face of the recessed female choke part.

13. A solenoid valve assembly according to one of the preceding claims, wherein the front face of the projecting male choke part and the bottom face of the recessed female choke part are flat and extend in a sideways direction perpendicular to the longitudinal direction.
